# EUROPÄISCHE PATENTANMELDUNG

(11) **EP 2 056 388 A1**
(43) Veröffentlichungstag der Anmeldung: **06.05.2009**
(21) Anmeldenummer: 08105398.5
(22) Anmeldetag: 22.09.2008
(51) Int. Cl.: H01M 8/06, C25B 1/04

(54) **Verfahren zum Vermeiden von gasförmigen Verunreinigungseinschlüssen in mindestens einem Gasraum einer Brennstoffzelle während einer Stillstandszeit und Brennstoffzelle mit Mitteln zur Durchführung des Verfahrens**

(30) Priorität: 31.10.2007 DE 102007052148
(71) Anmelder: ROBERT BOSCH GMBH, 70442 Stuttgart (DE)
(72) Erfinder: Baumann, Frank, 74395, Mundelsheim (DE); Wahl, Florian, 97816, Lohr (DE); Friede, Wolfgang, 71636, Ludwigsburg (DE); Limbeck, Uwe, 73230, Kirchheim Unter Teck (DE)

(57) **Zusammenfassung**

Der Gegenstand der vorliegenden Erfindung betrifft ein Verfahren zum Vermeiden von gasförmigen Verunreinigungseinschlüssen in mindestens einem Gasraum einer Brennstoffzelle (1) während einer Stillstandszeit der Brennstoffzelle (1), durch Erzeugen eines Überdrucks in dem mindestens einen Gasraum, umfassend die Schritte: Bilden von Edukten, die in einem Betriebsmodus zum Betreiben der Brennstoffzelle (1) dieser zugeführt werden, unter Energiezufuhr, Zuführen der Edukte zum Befüllen des Gasraumes, so dass dieser zumindest teilweise mit den Edukten gefüllt wird, und Befüllen des Gasraumcs, so dass ein Überdruck in dem Gasraum erzeugt wird und gasförmige Verunreinigungseinschlüsse im Wesentlichen vermieden werden.

## Beschreibung

Die Erfindung betrifft ein Verfahren zum Vermeiden von gasförmigen Verunreinigungseinschlüssen in mindestens einem Gasraum einer Brennstoffzelle während einer Stillstandszeit der Brennstoffzelle. Weiter betrifft die Erfindung eine Brennstoffzelle, umfassend mindestens zwei Elektrodeneinrichtungen, ein zwischen den Elektrodeneinrichtungen angeordnetes Elektrolytelement und mindestens eine Eduktleitung zum Zu- bzw. Abführen von gasförmigen Stoffen aus bzw. in die Brennstoffzelle, mit mindestens einem entsprechenden Gasraum.

### Stand der Technik

Derartige Verfahren und Brennstoffzelleneinrichtungen, welche Gasräume für den Betrieb vor Beschädigungen durch Verunreinigungseinschlüsse schützen, sind bekannt. Während eines Stillstands der Brennstoffzelle können diese nicht hermetisch abgedichtet werden, so dass mit der Zeit ohne zusätzliche Maßnahmen die Gasräume der Brennstoffzelle mit eindringenden Gasen wie Luft gefüllt werden. Beim Umschalten in einen Betriebsmodus der Brennstoffzelle werden die Reaktionsgase in die Gasräume eingeführt, in denen sich auch noch die gasförmigen Verunreinigungseinschlüsse befinden. Hierdurch kann es zu bestimmten Zeitpunkten dazu kommen, dass die Verunreinigungseinschlüsse - die Luft - und die Reaktionsgase gleichzeitig an verschiedenen Stellen der Anode in einem Flowfield der Brennstoffzelle vorhanden sind. Dabei entstehen an der Kathode Potentiale, die zu Korrosionseffekten führen, welche wiederum eine schnellere Alterung der Kathode bewirken. Im Stand der Technik wird dieses Problem dadurch gelöst, dass beim Einschalten der Brennstoffzelle in den Betriebsmodus ein inertes Gas den Gasräumen zugeführt wird, bevor das Reaktionsgas einfließt. Hierdurch lassen sich die schädlichen Potentiale vermeiden. Jedoch ist für das Zuführen von inertem Gas ein zusätzlicher Aufwand erforderlich, welcher insbesondere bei einem mobilen Einsatz wie in einem Kraftfahrzeug zu einem sehr hohen zusätzlichen Aufwand und enormem Platzbedarf führt, welcher sich nur schlecht realisieren lässt.

### Aufgabe und Vorteile der Erfindung

Es ist deshalb eine Aufgabe der vorliegenden Erfindung, ein Verfahren und eine Brennstoffzelle zu schaffen, welche mit geringem Aufwand und einer einfachen Struktur gasförmige Verunreinigungseinschlüsse in Gasräumen der Brennstoffzelle, insbesondere während eines Stillstandmodus der Brennstoffzelle, vermeiden.

Die vorstehende Aufgabe wird durch ein Verfahren gemäß Anspruch 1 und eine Brennstoffzelle gemäß Anspruch 6 gelöst. Vorteilhafte Weiterbildungen der Erfindung sind in den abhängigen Ansprüchen angegeben. Merkmale und Details, die im Zusammenhang mit dem erfindungsgemäßen Verfahren beschrieben sind, gelten dabei selbstverständlich auch im Zusammenhang mit der erfindungsgemäßen Brennstoffzelle und jeweils umgekehrt. Dabei können die in den Ansprüchen und in der Beschreibung erwähnten Merkmale jeweils einzeln für sich oder in beliebiger Kombination erfindungswesentlich sein.

Die Erfindung schließt die technische Lehre ein, dass bei einem Verfahren zum Vermeiden von gasförmigen Verunreinigungseinschlüssen in mindestens einem Gasraum einer Brennstoffzelle während einer Stillstandszeit der Brennstoffzelle, durch Erzeugen eines Überdrucks in dem mindestens einen Gasraum, umfassend die Schritte:
- Bilden von Edukten, die in einem Betriebsmodus zum Betreiben der Brennstoffzelle dieser zugeführt werden, unter Energiezufuhr,
- Zuführen der Edukte zum Befüllen des Gasraumes, so dass dieser zumindest teilweise mit den Edukten gefüllt wird, und
- Befüllen des Gasraumes, so dass ein Überdruck in dem Gasraum erzeugt wird und gasförmige Verunreinigungseinschlüsse im Wesentlichen vermieden werden.

Die Brennstoffzelle umfasst grundsätzlich zwei Elektrodenplatten, wobei eine Elektrodenplatte eine Anodenplatte und die andere Elektrodenplatte eine Kathodenplatte ist. Diese sind voneinander durch ein Elektrolytelement getrennt. Sind mehrere Brennstoffzellen zu einem Brennstoffzellenstack zusammengefasst, so sind die Elektrodenplatten als sogenannte Bipolarplatten ausgebildet, welche in einer Einheit sowohl die Anodenplatte als auch die Kathodenplatte umfassen. Die Elektrodenplatten, wie zum Beispiel die Bipolarplatten, sind elektrisch leitend ausgebildet.

Die Brennstoffzelle funktioniert im Wesentlichen nach folgendem Prinzip: in der Brennstoffzelle reagieren zwei Edukte, zum Beispiel Wasserstoff und Sauerstoff, miteinander zu einem Produkt, beispielsweise Wasser, wobei Energie gewonnen wird. Die Edukte, hier die beiden Gase Wasserstoff und Sauerstoff, sind durch ein Elektrolytelement voneinander getrennt und tauschen über einen elektrischen Leiter Elektronen aus. Dieser Elektronenfluss lässt die Brennstoffzelle in ihrem Betriebsmodus als Stromquelle fungieren. In einem Stillstandmodus der Brennstoffzelle wird entsprechend kein Strom erzeugt.

Die Brennstoffzelle, genauer die Elektrodenplatten weisen sogenannte Gasräume auf, in welchen sich die gasförmigen Edukte im Betriebsmodus befinden. Im Stillstandmodus wird durch das erfindungsgemäße Verfahren vermieden, dass gasförmige Verunreinigungen, wie zum Beispiel eindiffundierende Umgebungsluft, in die Gasräume einfließt. Dies erfolgt durch Erzeugen eines Überdrucks in den Gasräumen während einer Stillstandszeit, so dass keine Umgebungsluft von außen in die Gasräume eindiffundieren kann.

Um einen Überdruck zu erzeugen und den Gasraum oder die Gasräume frei von gasförmigen Verunreinigungseinschlüssen zu halten, werden zunächst im Stillstandmodus die Edukte gebildet, welche im Betriebsmodus der Brennstoffzelle zur Bildung des Produktes und der Energie zugeführt werden. Die Edukte können zum Beispiel Wasserstoff und Sauerstoff sein. Vorteilhafterweise werden solche Edukte im Stillstandmodus erzeugt, die in dem Betriebsmodus verwendet werden, um Strom mit der Brennstoffzelle zu gewinnen, so dass keine reaktionsfremden Stoffe in den Gasräumen vorhanden sind. Die Edukte werden unter Zufuhr von Energie gewonnen. Obwohl die Edukte im Stillstandmodus eigentlich die Produkte der Reaktion sind, wird hier der Begriff Edukte verwendet, um deutlich zu machen, dass es sich bei den erzeugten Stoffen um die Edukte in dem Betriebsmodus handelt. Damit entsprechen die Edukte im Betriebsmodus den Produkten im Stillstandmodus und die Produkte im Betriebsmodus den Edukten im Stillstandmodus. Dieses macht deutlich, dass die Reaktion zur Erzeugung eines Überdrucks im Stillstandmodus im Wesentlichen umgekehrt zu der Reaktion im Betriebsmodus abläuft. Nachdem die Edukte erzeugt sind, werden diese dem Gasraum zugeführt, um diesen entsprechend zu füllen. Der Gasraum wird solange gefüllt, bis ein Überdruck in dem Gasraum gegenüber der Umgebung realisiert ist. Durch den Überdruck können keine gasförmigen Verunreinigungen in den Gasraum eindiffundieren, so dass der Gasraum frei von gasförmigen Verunreinigungseinschlüssen ist.

In einer Ausführungsform umfasst der Schritt Vermeiden von gasförmigen Verunreinigungseinschlüssen in dem Gasraum das Verdrängen von gasförmigen Verunreinigungseinschlüssen. Sind bereits gasförmige Verunreinigungseinschlüsse in dem Gasraum vorhanden, werden diese durch die zugeführten Edukte, beispielsweise Wasserstoff und Sauerstoff, aus dem Gasraum verdrängt, so dass der Gasraum wieder frei von Verunreinigungseinschlüssen ist. Dabei wird der Gasraum so befüllt, dass wieder ein leichter Überdruck gegenüber der Umgebung realisiert wird. Der Überdruck kann allgemein nur minimal, das heißt um einige mbar bzw. hPa, gegenüber der Umgebung ausgebildet sein.

In einer weiteren Ausführungsform ist vorgesehen, dass der Schritt Bilden von Edukten durch eine geregelte Elektrolyse erfolgt. Hierbei wird unter Einwirkung eines elektrischen Stroms eine chemische Verbindung, wie zum Beispiel Wasser, aufgespaltet. Die Elektrolyse stellt dabei das umgekehrte Prinzip der Brennstoffzelle dar. Durch geeignete Regler wird die Elektrolyse entsprechend den Anforderungen geregelt. Im Prinzip ist ein ähnlicher Aufbau wie bei einer Brennstoffzelle erforderlich, so dass durch eine geeignete Regelung die Elektrolyse in der Brennstoffzelle selbst erfolgen kann. Aus diesem Grunde ist in einer Ausführungsform vorgesehen, dass der Schritt Bilden von Edukten intern in der Brennstoffzelle durch Umkehrung des Brennstoffzellenprinzips im Betriebsmodus erfolgt. Das heißt, im Stillstandmodus wird die Brennstoffzelle so umfunktioniert, dass diese die Elektrolyse durchführen kann. Entsprechend werden die Funktionen über eine Steuerung umgekehrt, insbesondere die Zuführung von Energie und Material umgekehrt. Dabei können die in dem Betriebsmodus zuvor gewonnene Energie genutzt werden, um im Stillstandmodus die Edukte des Betriebsmodus zu erzeugen. Alternativ kann jedoch auch eine separate Vorrichtung verwendet werden, über welche sich die Edukte erzeugen lassen.

Hierzu ist es in einem anderen Ausführungsbeispiel vorgesehen, dass der Schritt Bilden von Edukten extern außerhalb der Brennstoffzelle erfolgt. Natürlich lassen sich die beiden Verfahren auch kombinieren.

Die Erfindung schließt weiter die technische Lehre ein, dass bei einer Brennstoffzelle, umfassend mindestens zwei Elektrodeneinrichtungen, ein zwischen den Elektrodeneinrichtungen angeordnetes Elektrolytelement und mindestens eine Eduktleitung zum Zu- bzw. Abführen von gasförmigen Stoffen aus bzw. in die Brennstoffzelle, mit mindestens einem entsprechenden Gasraum, vorgesehen ist, dass die Brennstoffzelle Mittel zum Vermeiden von gasförmigen Verunreinigungseinschlüssen in dem Gasraum während eines Stillstandmodus der Brennstoffzelle aufweist. Die Mittel sind zum Durchführen des erfindungsgemäßen, zuvor beschriebenen Verfahrens ausgebildet.

Die Elektrodeneinrichtungen sind als Anode, zum Beispiel als Anodenplatte, und als Kathode, beispielsweise als Kathodenplatte ausgebildet. Zwischen diesen ist ein Elektrolytelement angeordnet, welches zum Beispiel eine Elektrolyt-Membran, insbesondere eine Polymer-Elektrolyt-Membran (PEM) oder dergleichen sein kann.

In einer Ausführungsform ist vorgesehen, dass die Mittel eine Druckeinrichtung zur Überdruckerzeugung in der Brennstoffzelle umfassen, um gasförmige Verunreinigungseinschlüsse zu verdrängen. Die Druckeinrichtung erzeugt einen Überdruck in dem Gasraum, so dass von außen keine gasförmigen Verunreinigungen in den Gasraum eindringen oder eindiffundieren können. Der dabei erzeugte Überdruck kann nur minimal über dem Umgebungsdruck liegen. Die Druckeinrichtung ist so ausgebildet, dass sie während des Stillstandmodus den Überdruck erzeugt. Der Überdruck wird dabei während des gesamten Stillstandmodus aufrecht gehalten. Erst beim Umschalten auf den Betriebsmodus wird dieser Überdruck aufgehoben. Der Überdruck wird in einer Ausgestaltung durch die Zufuhr und/oder Erzeugung von Edukten bewirkt.

In einer weiteren Ausführungsform der Erfindung ist vorgesehen, dass die Druckeinrichtung eine Elektrolyseeinheit umfasst, um im Stillstandmodus durch Erzeugen von Edukten, die im Betriebsmodus der Brennstoffzelle zuführbar sind, einen Überdruck in der Brennstoffzelle zu erzeugen. Um einen Überdruck in dem Gasraum oder den Gasräumen in dem Stillstandmodus der Brennstoffzelle zu erzeugen, werden im Stillstandmodus die Edukte des Betriebsmodus durch eine Elektrolyseeinheit erzeugt. Hierbei wird das Wirkprinzip der Brennstoffzelle umgekehrt. So wird beispielsweise aus Wasser und Energie Wasserstoff und Sauerstoff im Stillstandmodus erzeugt. Diese Edukte des Betriebsmodus werden den Gasräumen zugeführt, so dass diese dort einen Überdruck gegenüber der Umgebung erzeugen und gasförmige Verunreinigungseinschlüsse verdrängen oder vermeiden.

Aus diesem Grund ist in einem Ausführungsbeispiel vorgesehen, dass die Elektrolyseeinheit eine Zufuhr für ein Produkt aus dem Betriebsmodus der Brennstoffzelle, eine Energiezufuhr und einen Elektrolyseur zur Durchführung der Elektrolyse und Bildung der Edukte für den Betriebsmodus der Brennstoffzelle aufweist. Die Zufuhr für das Produkt des Betriebsmodus, beispielsweise Wasser, kann dabei einen Speicher, Leitungen, Fördermittel wie Pumpen, Drosseln, Ventile und andere Zufuhreinrichtungen umfassen. Diese Zufuhr kann als Rezirkulationskreislauf ausgebildet sein oder als offenes Leitungssystem mit einem Zu- und einem Abfluss. Die Zufuhr weist entsprechende Regeleinrichtungen auf, welche die Ventile, Drosseln etc., also insgesamt die Zuführung regeln. Die Energiezufuhr kann eine Stromquelle wie eine Batterie, eine Brennstoffzelle, einen Netzanschluss oder dergleichen aufweisen. Dabei kann die Energiezufuhr weiterhin Regler, Wandler und weitere Regel-, Mess- und Steuereinrichtungen zur Regelung der Energiezufuhr umfassen. Der Elektrolyseur ist zur Durchführung der Elektrolyse ausgebildet. Bei dem Elektrolyseur handelt es sich um eine Vorrichtung zur Zerlegung von Wasser durch Elektrolyse in die Grundkomponenten Wasserstoff und Sauerstoff. Der Elektrolyseur kann als alkalischer Elektrolyseur, als PEM-Elektrolyseur oder als Hochtemperatur-Elektrolyseur etc. ausgebildet sein.

In einer Ausführungsform ist vorgesehen, dass der Elektrolyseur die brennstoffzelleninternen Elektrodeneinrichtungen und das Elektrolytelement sowie eine Regelung zur Umkehr der Funktion der Brennstoffzelle nutzt, um in Umkehrung des Brennstoffzellenprinzips eine Gewinnung von zwei Edukten aus dem entsprechenden Produkt und Einsatz von Energie zu realisieren. Hierbei findet die Elektrolyse in der Brennstoffzelle statt. In einer anderen Ausführungsform ist vorgesehen, dass der Elektrolyseur brennstoffzellenexterne Elektroden und eine Elektrolytenschicht sowie eine Regelung zur Durchführung der Elektrolyse aufweist. Hierbei findet die Elektrolyse außerhalb der Brennstoffzelle statt.

Während des Stillstandmodus wird das Prinzip der Brennstoffzelle umgekehrt. Dabei wird in der Brennstoffzelle oder in einer getrennten Anordnung über Elektrolyse Wasserstoff erzeugt. Die Energie dazu liefert eine Energiezufuhr, beispielweise eine Fahrzeugbatterie oder bei Hybridfahrzeugen die Antriebsbatterie. Mit diesem Verfahren kann ein Brennstoffzellenstack auf einen leichten Überdruck gegenüber der Umgebung gehalten werden, so dass kein Gas von außen eindringen kann. Gleichzeitig kann über die Zufuhr des bei der Elektrolyse erzeugten Wasserstoffs und Sauerstoffs die Diffusion der Gase durch die Membran ausgeglichen werden.

Alle Gaszu- und -ableitungen können durch Ventile verschlossen werden. Die Ableitungen enthalten eine Drossel, die ein langsames Entweichen von Gas ermöglicht, wenn der Druck im Brennstoffzellenstack über dem Umgebungsdruck liegt. In der zweiten Ausführungsform wird am Stack eine Spannung angelegt, so dass am stackeigenen Katalysator eine Elektrolysereaktion stattfindet. Dadurch wird im Stack Wasserstoff und Sauerstoff produziert. Wasser wird auf der Kathodenseite als Edukt für die Elektrolyse zugeführt. In der ersten Ausführungsform findet die Elektrolyse entsprechend statt, allerdings nicht unter Benutzung des Katalysators im Stack. In diesem Fall wird ein externes Katalysatormodul genutzt, z. B. ebenfalls ein Katalysator, der auf der PEM-Technologie beruht. Baulich kann dieses Modul in den Stack integriert sein. Die Anordnung wird bei reversiblen Stacks funktionieren. Der notwendige Überdruck wird in beiden Fällen durch die Elektrolyse erzeugt. Die Energie kann relativ klein gehalten werden, wenn die Anordnung entsprechend abgedichtet ausgeführt ist. Das zur Elektrolyse notwendige Wasser kann während der einer Fahrt bei Verwendung in einem Kraftfahrzeug aus dem Produktwasser erzeugt werden. Bei längerer Stillstandszeit können sowohl die Batterie als auch der Wasserspeicher leer werden, so dass der Betrieb entweder abgeschaltet werden muss, so dass man mit der Anordnung nur die Folgen kürzerer Stillstandszeiten eliminiert, oder die Brennstoffzelle muss zur Herstellung von Strom und Wasser kurzzeitig automatisch eingeschaltet werden. Das Wasser wird in einem Behälter gespeichert, aus dem es der Elektrolyse zur Verfügung gestellt werden kann. Dieser Behälter kann elektrisch beheizt werden, um ihn vor dem Einfrieren zu schützen. Als mögliche Ausführungsform kann die Druckhaltung zusätzlich zur oder anstelle der oben erwähnten Drossel über eine definierte Stromentnahme aus der Brennstoffzelle erfolgen. Diese entnommene Energie kann der Batterie wieder zugeführt werden, so dass der gesamte Stromverbrauch verringert wird. Eine weitere Ausführungsform sieht eine Steuerung über einen modellbasierten Ansatz vor, über welchen sich ebenfalls die Drossel einsparen lässt. Die Elektrolyse außerhalb des Stacks kann durch fertig entwickelte Elektrolyseure erfolgen. Eine Ausführungsvariante ist ein partitionierter Stack, so dass eine Kombination beider Anordnungen realisierbar ist.

Weitere die Erfindung verbessernde Maßnahmen sind in den Unteransprüchen angegeben oder ergeben sich aus der nachfolgenden Beschreibung zweier Ausführungsbeispiele der Erfindung, welche in den Figuren schematisch dargestellt sind. Sämtliche aus den Ansprüchen, der Beschreibung oder den Zeichnungen hervorgehenden Merkmale und/oder Vorteile, einschließlich konstruktiven Einzelheiten, räumliche Anordnungen und Verfahrensschritte, können sowohl für sich als auch in den verschiedensten Kombinationen erfindungswesentlich sein. Es zeigen:
- Fig. 1: ein schematisches Schaltbild eines Aufbaus einer erstens Ausführungsform einer Brennstoffzelle mit externer Elektrolyse und

- Fig. 2: schematisch ein Schaltbild eines Aufbaus einer zweiten Ausführungsform einer Brennstoffzelle mit interner Elektrolyse.

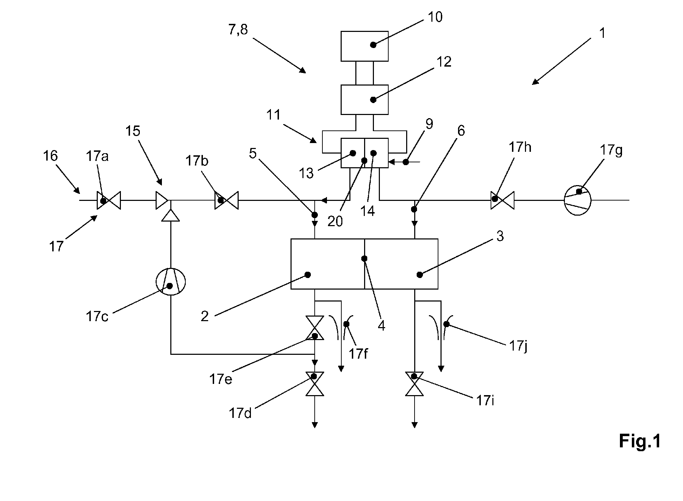

Fig. 1 zeigt schematisch ein Schaltbild eines Aufbaus einer ersten Ausführungsform einer Brennstoffzelle 1 mit externer Elektrolyse. Die Brennstoffzelle 1 umfasst zwei Elektrodeneinrichtungen 2, 3, wobei eine erste Elektrodeneinrichtung 2 als Anode und eine zweite Elektrodeneinrichtung 3 als Kathode ausgebildet ist. Weiter umfasst die Brennstoffzelle 1 ein Elektrolytelement 4, welches zwischen der Anode 2 und der Kathode 3 angeordnet ist. Zu den Elektrodeneinrichtungen 2, 3 führt jeweils eine Eduktleitung 5, 6. Über die entsprechende Eduktleitung 5, 6 wird der Anode 2 bzw. der Kathode 3 das entsprechende Edukt zugeführt. Die Eduktleitung 5 führt der Anode 2 im Betriebsmodus ein Brenngas, wie z.B. Wasserstoff zu und die Eduktleitung 6 führt der Kathode 3 im Betriebsmodus ein weiteres Brenngas, wie z.B. Sauerstoff zu. In den Eduktleitungen 5,6 bzw. in den Elektrodeneinrichtung 2,3 befinden sich entsprechende Gasräume, in welchen sich die entsprechenden Edukte befinden können.

Um nun gasförmige Verunreinigungen der Gasräume durch zum Beispiel eindiffundierende Umgebungsluft zu vermeiden, weist die Brennstoffzelle 1 eine Druckeinrichtung 7 auf, welche in der Brennstoffzelle 1, genauer in den Gasräumen, einen Überdruck gegenüber der Umgebung erzeugt.

Die Druckeinrichtung 7 umfasst eine Elektrolyseeinheit 8, welche im Stillstandmodus der Brennstoffzelle 1 die Edukte des Betriebsmodus der Brennstoffzelle erzeugt. Durch eine Zufuhr dieser Edukte in die Brennstoffzelle wird ein Überdruck in der Brennstoffzelle erzeugt. Die Elektrolyseeinheit 8 umfasst eine Zufuhr 9 für ein Produkt, eine Energiezufuhr 10 und einen Elektrolyseur 11 zur Durchführung der Elektrolyse. Über die Zufuhr 9 wird beispielsweise Wasser als Produkt dem Elektrolyseur 11 zugeführt. Über die Energiezufuhr 10 wird dem Elektrolyseur 11 die für die Elektrolyse erforderliche Energie zugeführt. Für die Regelung der Elektrolyse kann ein Regler 12, wie ein leistungselektronisches Stellglied (z.B. ein AC/DC oder DC/DC-Wandler) oder dergleichen vorgesehen sein. Der Elektrolyseur 11 umfasst eine Anodeneinheit 14 und eine Kathodeneinheit 13, an welchen Wasserstoff (Kathode) bzw. Sauerstoff (Anode) erzeugt werden. Der Wasserstoff und der Sauerstoff werden in ein entsprechendes Leitungssystem 15 eingeführt und über die entsprechenden Eduktleitungen 5, 6 der Brennstoffzelle zugeführt. Das Leitungssystem 15 umfasst neben entsprechenden Leitungen 16 auch weitere Leitungselemente 17 wie Drosseln, Verdichter, Pumpen, Ventile und dergleichen. Neben der Anodeneinheit 13 und der Kathodeneinheit 14 weist der Elektrolyseur 11 eine Elektrolytenschicht 20 auf.

Das Leitungssystem 15 ist wie folgt aufgebaut. Wenn die Ventile 17 a, b, und e geöffnet sind, wird ein Brenngas, wie z.B. Wasserstoff, über eine Leitung 16 aus einem Speicher zugeführt und gelangt durch Ventil 17a und 17b zur Anode 2. Unverbrauchter Wasserstoff wird durch das Ventil 17e zum Verdichter 17c geleitet, der den Wasserstoff durch das Ventil 17b wieder zur Brennstoffzelle 1 zurückführt. Diese Rückführung wird auch als Rezirkulation bezeichnet. Der Verdichter 17c zeigt nur eine beispielhafte Möglichkeit der Ausgestaltung. Denkbar ist es auch, dass eine Venturi-Düse für die Rezirkulation genutzt wird. Um beim Betrieb eine Ansammlung von Verunreinigungen, wie z.B. inerten Gasen zu vermeiden, wird über das Ventil 17d kontrolliert periodisch oder kontinuierlich Gas an die Umgebung abgegeben. Im Betrieb ist die Drossel 17f in der Regel geschlossen.

Im Betrieb sind die Ventile 17h und 17i geöffnet. Ein Oxidant, wie z.B. Luft oder Sauerstoff strömt vom Luftverdichter zur Kathode 3. Unverbrauchtes Oxidant gelangt durch das Ventil 17i in die Umgebung. Im Betrieb soll dabei möglichst keine Luft durch die Drossel 17j austreten, weshalb die Drossel 17j im Betrieb ebenfalls zu schließen ist. Während der Stillstandszeit wird die Brennstoffzelle 1 durch die Ventile 17b, 17e, 17h und 17i von der Umgebung getrennt. Über den Elektolyseur 11 wird ein Brenngas in das Innere der Brennstoffzelle geleitet. Dabei können die Drosseln 17f und 17j geöffnet und zur Druckhaltung verwendet werden.

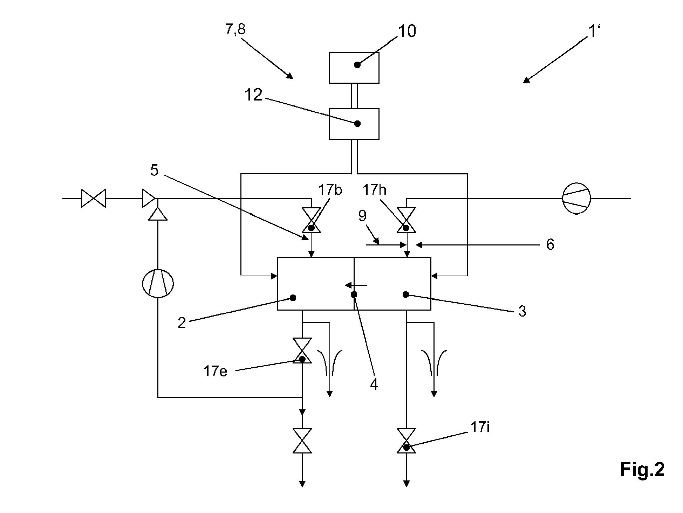

Fig. 2 zeigt schematisch ein Schaltbild eines Aufbaus einer zweiten Ausführungsform einer Brennstoffzelle 1' mit interner Elektrolyse. Die Brennstoffzelle 1' umfasst zwei Elektrodeneinrichtungen 2, 3, wobei eine erste Elektrodeneinrichtung 2 als Anode im Betriebsmodus und eine zweite Elektrodeneinrichtung 3 als Kathode im Betriebsmodus ausgebildet ist. Im Stillstandmodus tauschen die Elektrodeneinrichtungen 2, 3 ihre Funktion. Weiter umfasst die Brennstoffzelle 1 ein Elektrolytelement 4, welches zwischen den Elektrodeneinrichtungen 2, 3 angeordnet ist. Zu den Elektrodeneinrichtungen 2, 3 führt jeweils eine Eduktleitung 5, 6, wobei über die Eduktleitung 6 sowohl Sauerstoff als auch Wasser zu der Elektrodeneinrichtung 3 zugeführt werden kann. Über die entsprechende Eduktleitung 5, 6 wird der Anode 2 bzw. der Kathode 3 das entsprechende Edukt zu bzw. abgeführt. Die Eduktleitung 5 führt der Anode 2 im Betriebsmodus Wasserstoff zu und die Eduktleitung 6 führt der Kathode 3 im Betriebsmodus Sauerstoff zu. Im Stillstandmodus ist die Brennstoffzelle durch Schließen der Ventile 17 b,e,h,i von der Umgebung getrennt, so dass keine Gase zugeführt werden. Statt dessen wird in den Elektrodeneinrichtungen 5,6 Wasserstoff und Sauerstoff mittels Elektrolyse erzeugt. Hierzu wird über die Eduktleitung 6 bei geschlossenem Ventil 17h Wasser zugeführt. Durch die Energiezufuhr 10, geregelt über den

Regler 12, wird eine Spannung an die beiden Elektrodeneinrichtungen 2, 3 angelegt. Hierdurch wird die Brennstoffzelle 1 als Elektrolyseeinheit 11 betrieben und Wasserstoff und Sauerstoff werden aus dem Wasser erzeugt.

Die Brennstoffzelle 1' nach Fig. 2 unterscheidet sich als im Wesentlichen von der Brennstoffzelle 1 nach Fig. 1 dadurch, dass kein externer Elektrolyseur verwendet wird und entsprechend die Zufuhr 9 direkt in das Leitungssystem 15 führt. Entsprechend wird auch die Energiezufuhr 10 nicht zu dem externen Elektrolyseur 11 sondern zu den Elektrodeneinrichtungen 2, 3 geführt.

In den Eduktleitungen 5,6 bzw. in den Elektrodeneinrichtung 2,3 befinden sich entsprechende Gasräume, in welchen sich die entsprechenden Edukte befinden können. Um nun gasförmige Verunreinigungen der Gasräume durch zum Beispiel eindiffundierende Umgebungsluft zu vermeiden, weist die Brennstoffzelle 1 eine in die Brennstoffzelle integrierte Druckeinrichtung 7 auf, welche in der Brennstoffzelle 1, genauer in den Gasräumen, einen Überdruck gegenüber der Umgebung erzeugt. Die Druckeinrichtung 7 umfasst eine Elektrolyseeinheit 8, welche im Stillstandmodus der Brennstoffzelle 1 die Edukte des Betriebsmodus der Brennstoffzelle erzeugt. Die Elektrolyseeinheit 8 umfasst eine Zufuhr 9 für ein Produkt, eine Energiezufuhr 10 und einen Elektrolyseur 11 zur Durchführung der Elektrolyse. Über die Zufuhr 9 wird beispielsweise Wasser als Produkt dem Elektrolyseur 11 zugeführt. Über die Energiezufuhr 10 wird dem Elektrolyseur 11 die für die Elektrolyse erforderliche Energie zugeführt. Für die Regelung der Elektrolyse kann ein Regler 12, wie ein DC/DC-Wandler oder dergleichen vorgesehen sein. Der Elektrolyseur 11 umfasst die erste Elektrodeneinrichtung 2 und die zweite Elektrodeneinrichtung 3, an welchen Wasserstoff (Anode) bzw. Sauerstoff (Kathode) erzeugt werden. Der Wasserstoff und der Sauerstoff werden in ein entsprechendes Leitungssystem 15 bzw. die Gasräume der Brennstoffzelle 1 eingeführt und bei Einschalten des Betriebsmodus über die entsprechenden Eduktleitungen 5, 6 der Brennstoffzelle 1 abgeführt. Das Leitungssystem 15 ist analog zu Fig. 1 ausgebildet und umfasst neben entsprechenden Leitungen 16 auch weitere Leitungselemente 17 wie Drosseln, Verdichter, Pumpen, Ventile und dergleichen.

## Patentansprüche

1. Verfahren zum Vermeiden von gasförmigen Verunreinigungseinschlüssen in mindestens einem Gasraum einer Brennstoffzelle (1) während einer Stillstandszeit der Brennstoffzelle (1), durch Erzeugen eines Überdrucks in dem mindestens einen Gasraum, umfassend die Schritte:
- Bilden von Edukten, die in einem Betriebsmodus zum Betreiben der Brennstoffzelle (1) dieser zugeführt werden, unter Energiezufuhr,
- Zuführen der Edukte zum Befüllen des Gasraumes, so dass dieser zumindest teilweise mit den Edukten gefüllt wird, und
- Befüllen des Gasraumes, so dass ein Überdruck in dem Gasraum erzeugt wird und gasförmige Verunreinigungseinschlüsse im Wesentlichen vermieden werden.

2. Verfahren nach Anspruch 1, **dadurch gekennzeichnet, dass** das Vermeiden von gasförmigen Verunreinigungseinschlüssen in dem Gasraum das Verdrängen von gasförmigen Verunreinigungseinschlüssen umfasst.

3. Verfahren nach Anspruch 1 oder 2, **dadurch gekennzeichnet, dass** der Schritt Bilden von Edukten durch eine geregelte Elektrolyse erfolgt.

4. Verfahren nach Anspruch 1 bis 3, **dadurch gekennzeichnet, dass** der Schritt Bilden von Edukten intern in der Brennstoffzelle (1) durch Umkehrung des Brennstoffzellenprinzips im Betriebsmodus erfolgt.

5. Verfahren nach einem Anspruch 1 bis 3, **dadurch gekennzeichnet, dass** der Schritt Bilden von Edukten extern außerhalb der Brennstoffzelle (1) erfolgt.

6. Brennstoffzelle (1), umfassend mindestens zwei Elektrodeneinrichtungen (2,3), ein zwischen den Elektrodeneinrichtungen (2,3) angeordnetes Elektrolytelement (4) und mindestens eine Eduktleitung (5,6) zum Zu- bzw. Abführen von gasförmigen Stoffen aus bzw. in die Brennstoffzelle (1), mit mindestens einem entsprechenden Gasraum,
**dadurch gekennzeichnet, dass** die Brennstoffzelle (1) Mittel zum Vermeiden von gasförmigen Verunreinigungseinschlüssen in dem Gasraum während eines Stillstandmodus der Brennstoffzelle (1) aufweist.

7. Brennstoffzelle (1) nach Anspruch 6, **dadurch gekennzeichnet, dass** die Mittel eine Druckeinrichtung (7) zur Überdruckerzeugung in der Brennstoffzelle (1) umfassen, um gasförmige Verunreinigungseinschlüsse zu verdrängen.

8. Brennstoffzelle (1) nach Anspruch 6 oder 7, **dadurch gekennzeichnet, dass** die Druckeinrichtung (7) eine Elektrolyseeinheit (8) umfasst, um im Stillstandmodus durch Erzeugen von Edukten, die im Betriebsmodus der Brennstoffzelle (1) zuführbar sind, einen Überdruck in der Brennstoffzelle (1) zu erzeugen.

9. Brennstoffzelle (1) nach einem der Ansprüche 6 bis 8, **dadurch gekennzeichnet, dass** die Elektrolyseeinheit (8) eine Zufuhr (9) für ein Produkt im Betriebsmodus der Brennstoffzelle (1), eine Energiezufuhr (10) und einen Elektrolyseur (11) zur Durchführung der Elektrolyse und Bildung der Edukte im Betriebsmodus der Brennstoffzelle (1) aufweist.

10. Brennstoffzelle (1) nach einem der Ansprüche 6 bis 9, **dadurch gekennzeichnet, dass** der Elektrolyseur (11) die brennstoffzelleninternen Elektrodeneinrichtungen (2,3) und das Elektrolytelement (4) sowie eine Regelung (12) zur Umkehr der Funktion der Brennstoffzelle (1) aufweist, um in Umkehrung des Brennstoffzellenprinzips eine Gewinnung von zwei Edukten aus dem entsprechenden Produkt und Einsatz von Energie zu realisieren.

11. Brennstoffzelle (1) nach einem der Ansprüche 6 bis 9, **dadurch gekennzeichnet, dass** der Elektrolyseur (11) brennstoffzellenexterne Elektroden (13, 14) und eine Elektrolytenschicht (20) sowie eine Regelung (12) zur Durchführung der Elektrolyse aufweist.
